# FASCICULE DE BREVET EUROPEEN

(11) **EP 0 378 946 B1**
(45) Date de publication et mention de la délivrance du brevet: **17.08.1994**
(21) Numéro de dépôt: 89403581.5
(22) Date de dépôt: 20.12.1989
(51) Int. Cl.: F24F 5/00, C02F 1/14

(54) **Procédé de refroidissement et de déshumidification d'air chaud et humide ainsi qu'installation permettant la mise en oeuvre de ce procédé**
Verfahren zum Kühlen und Entfeuchten von warmer, feuchter Luft sowie Anlage zur Durchführung dieses Verfahrens
Process for cooling and drying warm humid air and installation for carrying out this process

(30) Priorité: 22.12.1988 FR 8816986
(43) Date de publication de la demande: 25.07.1990
(73) Titulaire: SORELEC, F-45500 Saint Jean de Braye (Loiret) (FR)
(72) Inventeur: Djelouah, Salah, Saint Denis De L'Hotel Loiret (FR); Forrat, Francis, Manosque Basses Alpes (FR)
(74) Mandataire: Cabinet HERRBURGER

(56) Documents cités:
- CH-B- 596 511
- FR-A- 2 398 023
- US-A- 4 295 518

## Description

La présente invention se rapporte à un procédé et une installation de refroidissement et de déshumidification en continu d'air chaud et humide, produisant soit de l'air frais et sec ainsi que de l'eau, soit de l'énergie mécanique ou électrique et de l'eau.

Les conditions de températures et d'hygrométrie qui règnent dans les pays tropicaux posent des problèmes tout particuliers à leurs habitants, liés au souhait, pour des raisons de confort, de développer les installations de climatisation, tant domestiques que collectives, et surtout, a l'obligation de remédier au problème crucial du manque d'eau, qui est catastrophique pour certaines populations. Le seul moyen de résoudre ce problème semble être de dessaler l'eau de mer.

Les dispositifs de climatisation sont généralement basés sur un refroidissement par contact, dans un échangeur refroidi par un groupe frigorifique ; cette technique, qui donne toute satisfaction dans les pays tempérés n'est malheureusement que difficilement adaptable à grande échelle aux pays tropicaux étant donné le caractère onéreux et fragile de ces installations. Il convient, en outre, de noter que celles-ci ne sont pas compétitives avec d'autres systèmes tels que l'évaporation multi-effets pour le dessalement de l'eau de mer.

On connaît, notamment, un procédé (CH-596 511) dont le seul but est de sécher de l'air destiné plus particulièrement à des installations de climatisation. Dans la technique décrite par ce document, on obtient de l'air asséché dont la température à la sortie de l'installation est supérieure à la température d'entrée, résultat opposé au refroidissement recherché selon la présente invention. Ce document prévoit également d'utiliser deux turbines au lieu d'une seule et un échangeur utilisant le même air de climatisation dans les deux circuits, ce qui a l'inconvénient de conduire à une température de sortie trop élevée nécessitant, comme cela est dit ouvertement, un système classique complémentaire de refroidissement. Le surcoût d'une telle installation double n'est pas acceptable, économiquement parlant. A noter également que l'auteur du procédé ne s est pas aperçu qu'un séparateur d'eau était indispensable avant la première turbine. De plus, ce brevet indique que : "la somme des puissances libérées par les deux turbines est théoriquement supérieure à celle absorbée par le compresseur", ce qui est contraire au second principe de la thermodynamique, si le processus n'est pas complété par un apport externe d'énergie thermique. Cette erreur est d'ailleurs confirmée par la nécessité d'une régulation pour éviter que la machine n'atteigne une vitesse trop importante.

On connaît également (document US-A-4 295 518), un procédé de réfrigération qui fonctionne en circuit fermé et dans lequel, si de l'humidité était présente initialement dans le circuit, elle serait éliminée au bout d'un cycle, lequel ne dure que quelques minutes.

Ce document américain prévoit, en plus du mode réfrigération, un second mode de fonctionnement : le mode pompe à chaleur qui fonctionne en circuit ouvert ; ce mode de fonctionnement a cependant pour but de produire du chaud et non du froid et le choix d'un fonctionnement en circuit ouvert tient uniquement au fait que dans ce mode de fonctionnement, l'air refroidi est inintéressant, non utilisable et susceptible de créer des problèmes de givrage : il doit donc être rejeté à l'extérieur. Il est clair que dans les deux modes de fonctionnement décrits dans le document US-A-4 295 518, l'humidité est considérée comme un inconvénient que l'on cherche à éliminer.

La présente invention a pour but de créer un procédé et une installation de refroidissement et de déshumidification en continu d'air chaud et humide destinés notamment à assurer la climatisation en climat tropical humide et permettant de fournir de l'air frais et sec ainsi que de l'eau distillée tout en convertissant en énergie mécanique la chaleur de condensation de la vapeur pendant la détente.

Un but de l'invention est de proposer un procédé et une installation de refroidissement d'air chaud plus particulièrement destiné à des pays tropicaux qui puisse facilement être mis en oeuvre dans des installations individuelles de climatisation et soit peu sophistiqué, c'est-à-dire de coût peu élevé, et parallèlement de nature à permettre de déshumidifier l'air ambiant, qui, sous ces latitudes, est souvent fortement chargé en humidité.

A cet effet, l'invention concerne un procédé du type ci-dessus par lequel on fait subir à l'air qui arrive en permanence au moins une compression et une détente, caractérisé en ce que l'on récupère et convertit en énergie mécanique la chaleur de condensation de l'eau pendant la détente et on utilise l'énergie ainsi récupérée, combinée à l'énergie motrice de détente, notamment lors de la compression.

Selon une autre caractéristique de l'invention, on traite l'air dans une étape préliminaire ou intermédiaire en le chauffant notamment par l'énergie solaire et en le saturant en eau pour la production d'eau condensée.

De manière plus précise, l'air chaud et humide est comprimé, déshumidifié partiellement, puis soumis à une détente sensiblement adiabatique

Cette définition de l'invention englobe également l'ordre inverse des opérations, c'est-à-dire la détente de l'air, suivie de la déshumidification et de la compression. Dans les deux cas, on obtient de l'eau condensée. Cela permet de récupérer le travail moteur de détente majoré de l'énergie apportée par la condensation de l'eau dans le détendeur. Cette énergie motrice peut être récupérée dans une turbine ou, plus généralement, dans un détendeur-moteur et diminue d'autant l'énergie à fournir lors de la compression.

De manière générale, le procédé selon l'invention permet soit de produire de l'air refroidi et de l'eau par compression et par détente, soit, si l'on apporte à l'air un supplément d'énergie thermique (comme par exemple de l'énergie solaire), de l'énergie et de l'eau par détente puis compression.

De façon générale, la présente invention permet de multiples applications comme par exemple le refroidissement de l'air et la production d'eau par compression, refroidissement et déshumidification, puis détente du fluide ou bien la production d'énergie et d'eau par détente puis séparation du liquide et compression de l'air asséché.

La mise en oeuvre du procédé de l'invention est principalement basée sur le fait bien connu que le point de saturation de l'air varie avec la température, ou, en d'autres termes, que, à saturation, la teneur en vapeur d'eau de l'air chaud est nettement plus importante que celle de l'air froid. En effet, l'air à 90°C peut contenir environ 400 g de vapeur d'eau par mètre cube, tandis que cette valeur s'abaisse aux environs de 32 g/m³ à 35°C et 5 g/m³ à 4°C.

Par suite, si l'on fait subir à de l'air fortement chargé en vapeur d'eau, une détente dans des conditions assez proches d'une isentropique adiabatique, la diminution de la pression a pour corollaire une forte diminution de la température et entraîne une importante diminution de la teneur en vapeur d'eau de l'air, c'est-à-dire la condensation de cette eau.

Un autre avantage de ce procédé est lié au caractère exothermique de la condensation de l'eau pendant la détente : l'énergie restituée par la condensation de la vapeur d'eau est en effet de l'ordre de 2 500 kJ/kg, soit près de 700 Wh par kilogramme d'eau liquide produite. En conséquence, si l'on traite un air primitivement à une température de 35°C, saturé à 90 %, c'est-à-dire contenant 32 g/m³ de vapeur d'eau, de façon à abaisser sa température à 14°C, celui-ci, à saturation, ne peut plus contenir que 7 g de vapeur d'eau par mètre cube ; ceci signifie que, pour un rendement maximal, on doit en cours de processus liquéfier 25 g d'eau par mètre cube d'air, dont 15 g sont condensés pendant la détente en produisant une énergie de 10,5 Wh.

Dans la réalité, bien entendu, on ne peut pas effectuer l'opération de détente dans des conditions parfaitement isentropiques, et par suite, le rendement n'est jamais égal à 100 % ; la quantité d'énergie récupérée est cependant toujours appréciable, et peut avantageusement être utilisée lors de la phase de compression.

Il est clair que, selon une première variante de l'invention, le procédé décrit ci-dessus peut avantageusement être utilisé pour assurer la climatisation en climat tropical humide de façon à fournir de l'air frais et sec ainsi que de l'eau distillée.

Conformément à cette variante, on comprime l'air chaud et humide, on le déshumidifie partiellement par refroidissement puis on le soumet à une détente sensiblement adiabatique.

On peut ainsi réaliser des installations de climatisation particulièrement simples et rustiques.

Compte tenu de ce qui précède, il est clair que le procédé susmentionné permet, d'une manière simple, d'obtenir parallèlement, d'une part de l'air frais et relativement sec, et, d'autre part, de l'eau ayant subi un processus de distillation, donc d'une grande pureté.

Conformément à une seconde variante de l'invention, on a tout naturellement pensé à utiliser à plus grande échelle cette possibilité d'obtenir de l'eau fraîche et pure pour mettre au point un procédé permettant le dessalement de l'eau de mer et dans lequel l'eau de saturation est obtenue par évaporation d'eau salée.

Selon ce procédé, on détend l'air chaud et humide en le déshumidifiant partiellement puis on le refroidit et on le soumet à une compression.

Conformément à cette variante, il est bien entendu nécessaire de traiter l'air dans une étape préliminaire ou intermédiaire en le chauffant notamment par l'énergie solaire et en le saturant en vapeur d'eau par évaporation d'eau salée provenant de la mer ou de lagunes. Cette eau est ellemême chauffée à l'énergie solaire et, éventuellement, par l'air chaud sortant du compresseur.

La rentabilité de ce procédé est en fait liée à l'efficacité de ce chauffage préliminaire : en effet, comme il a déjà été indiqué, de l'air chauffé à 90°C, peut contenir jusqu'à environ 400 g d'eau par mètre cube à la pression atmosphérique normale.

L'invention se rapporte également à une installation permettant la mise en oeuvre du procédé susmentionné.

Cette installation est caractérisé en ce qu'elle comporte un compresseur et un détendeur moteur qui traite l'air chaud et humide en le comprimant, puis en le détendant ou inversement, ces deux éléments étant reliés par l'intermédiaire d'un échangeur thermique.

Pour lui permettre de comprimer l'air chaud et humide de départ, le compresseur est entraîné par un moteur électrique, qui peut être alimenté par un réseau électrique ou encore par une photo-pile pour rendre l'installation autonome. Un élément indispensable pour obtenir de basses températures est un échangeur (par exemple air-air) ou un échangeurcondenseur destiné à refroidir l'air comprimé et à le déshumidifier partiellement avant son injection dans le détendeur.

Il est clair qu'ainsi conçue, l'installation conforme à l'invention est extrêmement simple et peut être utilisée de manière particulièrement avantageuse pour la climatisation des habitations tropicales, que ce soit au niveau domestique ou collectif.

Lorsque, parallèlement à une telle climatisation, on cherche à obtenir de l'eau pure à partir d'eau salée, il est nécessaire d'augmenter artificiellement la température de l'air de départ pour augmenter sa teneur en humidité par suite d'évaporation d'eau salée.

A cet effet, et selon une autre caractéristique de l'invention, l'installation comporte une serre permettant au soleil de surchauffer l'eau que l'on cherche à dessaler.

Pour améliorer l'évaporation, il est possible, selon une autre caractéristique de l'invention, de recouvrir la surface de l'eau à évaporer d'un élément absorbant l'énergie solaire.

Une autre possibilité pouvant être mise en oeuvre pour augmenter la température de l'air de départ consiste à faire appel à un chauffe-eau solaire notamment à concentration.

Dans tous les cas, on peut, avantageusement si nécessaire, récupérer les gouttes d'eau entraînées par l'air à l'aide d'un éliminateur de gouttes d'eau.

La consommation en énergie de l'installation est toujours nettement diminuée en utilisant, au niveau de la compression, le travail de détente majoré de l'énergie de condensation de l'eau. Il est à noter que l'installation peut être énergétiquement autonome si l'air est chauffé avant son introduction dans le détendeur. Le moteur électrique d'entraînement du compresseur n'est nécessaire que pour le démarrage. Il doit ensuite être remplacé par un appareil consommateur d'énergie mécanique comme, par exemple, une pompe ou un alternateur si l'on veut produire de l'énergie électrique.

Les caractéristiques du procédé ainsi que de l'installation qui font l'objet de l'invention seront décrites plus en détail en se référant aux dessins annexés dans lesquels :
- la figure 1 est un schéma d'un exemple d'installation utilisée en climatiseur,
- la figure 2 est un schéma d'un exemple d'installation utilisée en dessalement.

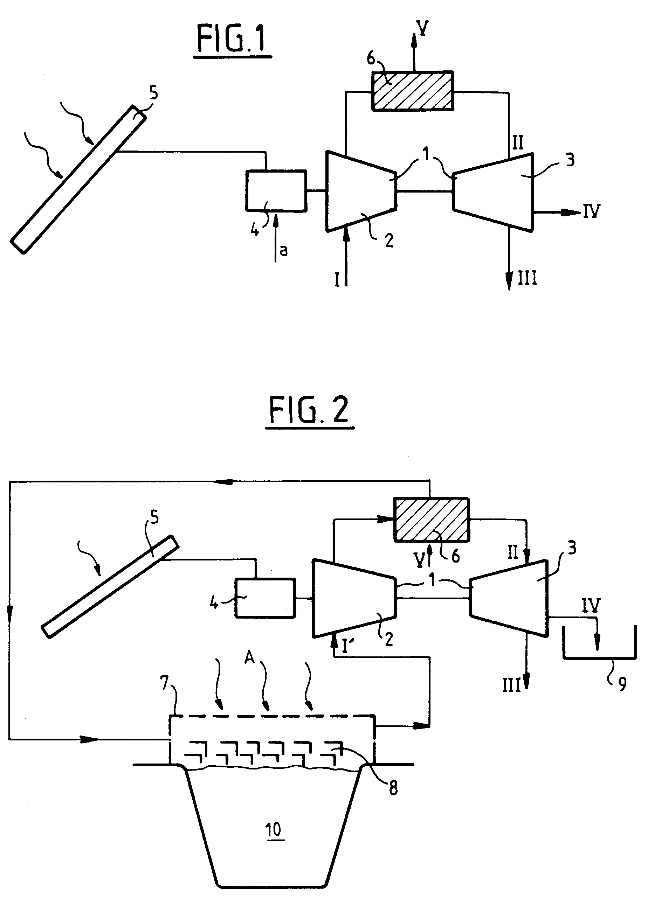

Selon la figure 1, l'élément principal de l'installation est constitué par un compresseur 1 ou détendeur subdivisé en un compresseur 2 qui comprime l'air de départ et en une turbine ou détenteur 3 qui le détend. Le compresseur 2 est entraîné par un moteur électrique 4, qui, conformément à la figure, est alimenté par une photo-pile 5 mais qui pourrait également être combiné à un réseau électrique ; un échangeur air-air 6 abaisse la température de l'air comprimé.

Selon la figure, l'air ambiant chaud et humide (par exemple : pression = 1 bar, température = 35°C, humidité 90 % soit 32 g d'eau par m³) est comprimé par le compresseur (ex. : 2 bars, 100°C), refroidi par échange thermique (ex. : 40°C) d'où une première condensation (10 g/m³ initial) puis détendu dans le détendeur-moteur 2, d'où abaissement de la température (14°C) et une deuxième condensation (14,7 g/m³ initial). L'énergie libérée hors de cette étape de détente avec condensation est utilisée pour l'entraînement du compresseur et diminue d'autant sa consommation d'énergie électrique.

Selon la figure 2, on associe à l'installation de climatisation, un réservoir d'eau à purifier 10 qui est surchauffée par le rayonnement solaire A à l'aide d'une serre 7 ; l'évaporation est améliorée grâce à l'adjonction d'un caillebotis ou d'un absorbeur immergé 8 absorbant le rayonnement. L'air réchauffé et humidifié (ex. : 1 bar, 80°c, 90 %) traverse le détendeur 2 en produisant de l'énergie et de l'eau liquide 9 (ex. : 6 g/m³), est refoidi dans l'échangeur 3 (0,8 bar, 40°C) d'où une deuxième condensation (219 g/m³), puis rejeté à la pression atmosphérique par le compresseur 1 (1 bar, 60°C). On peut récupérer l'énergie thermique de l'air à la sortie du compresseur ainsi que l'énergie thermique de refroidissement de l'échangeur 3 et utiliser ces énergies pour réchauffer l'air ou l'eau avant la serre 7. L'installation est énergétiquement autonome et produit même un surplus d'énergie noble (2,4 Wh/m³), par exemple de l'énergie électrique si l'on accouple une génératrice en 4.

Il est clair que l'installation objet de l'invention peut être utilisée :
- dans sa première version pour la climatisation des habitations en zone chaude et humide au niveau domestique ou collectif. En desséchant l'air, elle apporte le confort et un peu d'eau pure,
- dans sa deuxième version, pour le dessalement de l'eau de mer ou de lagunes dans les zones chaudes, également au niveau domestique ou collectif. Elle produit une eau pure et un peu d'énergie.
- dans d'autres versions dérivées des précédentes, en combinant certains éléments d'entre-elles pour être mieux adaptées à des situations locales particulières.

## Revendications

1. Procédé de refroidissement et de déshumidification en continu d'air chaud et humide, par lequel on fait subir à l'air qui arrive en permanence au moins une compression et une détente, caractérisé en ce que l'on récupère et convertit en énergie mécanique la chaleur de condensation de l'eau pendant la détente et on utilise l'énergie ainsi récupérée, combinée à l'énergie motrice de détente, notamment lors de la compression.

2. Procédé selon la revendication 1, caractérisé en ce que l'on traite l'air dans une étape préliminaire ou intermédiaire en le chauffant notamment par l'énergie solaire et en le saturant en eau pour la production d'eau condensée.

3. Procédé selon l'une quelconque des revendications 1 et 2, plus particulièrement destiné à assurer la climatisation en climat tropical humide et permettant de fournir de l'air frais et sec ainsi que de l'eau distillée, caractérisé en ce qu'on l'on comprime l'air chaud et humide, on le déshumidifie partiellement par refroidissement, puis on le soumet à une détente sensiblement adiabatique.

4. Procédé selon la revendication 2, plus particulièrement destiné au dessalement de l'eau de mer et dans lequel l'eau de saturation est obtenue par évaporation d'eau salée, caractérisé en ce que l'on détend l'air chaud et humide en le déshumidifiant partiellement, puis on le refroidit et on le soumet à une compression.

5. Installation pour la mise en oeuvre du procédé selon l'une quelconque des revendications 1 à 4, caractérisée en ce qu'elle comporte un compresseur (2) et un détendeur moteur (3) qui traite l'air chaud et humide en le comprimant, puis en le détendant ou inversement, ces deux éléments (2, 3) étant reliés par l'intermédiaire d'un échangeur thermique (6).

6. Installation selon la revendication 5, caractérisée en ce qu'elle comporte une serre (7) permettant au soleil de surchauffer l'eau à dessaler.

7. Installation selon la revendication 5, caractérisée en ce qu'elle comporte au moins un chauffe-eau solaire, notamment à concentration.

8. Installation selon l'une quelconque des revendications 5 à 7, caractérisée en ce qu'elle comporte un organe d'absorption de l'énergie solaire, notamment un caillebotis noir (8) immergé à la surface de l'eau notamment de l'eau de mer de saturation.

9. Installation selon l'une quelconque des revendications 5 et 8, caractérisée en ce qu'elle comporte un éliminateur de gouttes (9) d'eau permettant de récupérer les gouttes d'eau entraînées par l'air.

## Claims

1. Process for cooling and dehumidifying continuously hot and damp air, with which the air that arrives continuously is at least once compressed and expanded, characterized in that the water condensation heat during expansion is recuperated and converted in mechanical energy which is used combined with expanding motor energy, notably during the compression.

2. Process according to claim 1, characterized in that the air is treated during a previous step by heating notably with solar energy and by saturating it with water for production of condensed water.

3. Process according to claim 1 or 2, more particularly for air conditioning in tropical damp countries for supplying fresh and dry air and also pure water characterized in that the hot and damp air is compressed, is partially dehumidified by cooling, and is submitted to a rapid expansion substantially adiabatic.

4. Process according to claim 2, more particularly adapted to desalinate water of the sea and in which the saturation water is obtained by evaporation of salted water, characterized in that the hot and damp air is expanded with partial dehumidification, and then refreshed and submitted to a compression.

5. Installation for performing the process as claimed in claims 1 to 4, characterized in that it comprises a compressor (2) and a motor expandor (3) which handled the hot and damp air by compressing it, then by expanding it or reversely, these two elements (2, 3) being connected via a heat exchangor (6).

6. Installation according to claim 5, characterized in that it comprises a glass house (7) allowing the sun to over heat the water to be desalinated.

7. Installation according to claim 5, characterized in that it comprises at least one solar water heater, notably with concentration.

8. Installation according to anyone of claims 5 to 7, characterized in that it comprises solar energy absorption means, notably a black grating (8) immersed on the surface of the water, notably the saturation sea water.

9. Installation according to anyone of claims 5 and 8, characterized in that it comprises a water droplet separator (9), enabling the drops of water carried by the air to be recovered.

## Patentansprüche

1. Verfahren zum kontinuierlichen Kühlen und Trocknen von warmer, feuchter Luft, bei dem die einströmende Luft ständig wenigstens einer Verdichtung und einer Entspannung ausgesetzt wird, dadurch gekennzeichnet, daß in der Entspannungsphase die bei der Kondensation des Wassers frei werdende Wärme zurückgewonnen und in mechanische Energie umgewandelt wird und die so wiederverwendbar gemachte Energie zusammen mit der Entspannungsenergie genutzt wird, und zwar insbesondere in der Verdichtungsphase.

2. Verfahren nach Anspruch 1, dadurch gekennzeichnet, daß die Luft in einer Vorbehandlungs- oder Zwischenbehandlungsphase insbesondere durch Sonnenenergie erwärmt und mit Feuchtigkeit gesättigt wird, um später Kondenswasser zu gewinnen.

3. Verfahren nach Anspruch 1 oder 2, das besonders für Klimaanlagen in feuchtem tropischem Klima geeignet ist und die Herstellung von frischer, trockener Luft ermöglicht sowie auch von destilliertem Wasser, dadurch gekennzeichnet, daß die warme feuchte Luft verdichtet, die Feuchtigkeit durch Kühlung teilweise daraus entfernt und dann einer annähernd adiabatischen Entspannung ausgesetzt wird.

4. Verfahren nach Anspruch 2, das besonders zur Meerwasserentsalzung geeignet ist und bei dem das Sättigungswasser durch Verdampfen des Salzwassers entsteht, dadurch gekennzeichnet, daß die warme, feuchte Luft durch die teilweise Entfernung der Feuchtigkeit entspannt, dann gekühlt und verdichtet wird.

5. Anlage zur Durchführung des Verfahrens nach einem der Ansprüche 1 bis 4, dadurch gekennzeichnet, daß sie aus einem Verdichter (2) und einem motorbetriebenen Druckreduzierventil (3) besteht und die warme feuchte Luft verdichtet und dann entspannt oder umgekehrt, wobei diese beiden Teile (2, 3) durch einen Wärmetauscher (6) verbunden sind.

6. Anlage nach Anspruch 5, dadurch gekennzeichnet, daß sie ein Treibhaus (7) umfaßt, das die solare Erhitzung des zu entsalzenden Wassers ermöglicht.

7. Anlage nach Anspruch 5, dadurch gekennzeichnet, daß sie mindestens einen Solar-Warmwasserbereiter aufweist, insbesondere mit Strahlenkonzentration.

8. Anlage nach einem der Ansprüche 5 bis 7, dadurch gekennzeichnet, daß sie ein Solarenergie absorbierendes Organ aufweist, insbesondere einen schwarzen Gitterrost (8), der sich unter der Oberfläche des Sättigungsmeerwassers befindet.

9. Anlage nach einem der Ansprüche 5 bis 8, dadurch gekennzeichnet, daß sie einen Wassertropfenabscheider (9) aufweist, mit dem die von der Luft mitgenommenen Wassertropfen entfernt werden können.
